## Europäisches Patentamt
## European Patent Office
## Office européen des brevets

(11) Numéro de publication: **0 291 399**
**A1**

## (12) DEMANDE DE BREVET EUROPEEN

(21) Numéro de dépôt: 88401125.5

(22) Date de dépôt: 09.05.88

(51) Int. Cl.⁴: **F 25 B 41/06**
F 17 C 13/04, B 01 D 46/54

(30) Priorité: 15.05.87 FR 8706815

(43) Date de publication de la demande:
17.11.88 Bulletin 88/46

(84) Etats contractants désignés:
BE CH DE ES FR GB IT LI LU NL SE

(71) Demandeur: L'AIR LIQUIDE, SOCIETE ANONYME POUR
L'ETUDE ET L'EXPLOITATION DES PROCEDES
GEORGES CLAUDE
75, Quai d'Orsay
F-75321 Paris Cédex 07 (FR)

(72) Inventeur: Coffre, Eric
6, avenue Carnot
F-78190 Trappes (FR)

Gary, Daniel
23, Rue Champ Lagarde 6, Résidence des Pépinières
F-78000 Versailles (FR)

di Giulio, Christophe
61, Avenue du Roule
F-92200 Neuilly-sur-Seine (FR)

Loiseau, Gérard
92, rue de la Paroisse
F-78000 Versailles (FR)

Torelli, Gérard
72, rue Jean Bleuzen
F-92170 Vanves (FR)

(74) Mandataire: Leclercq, Maurice et al
L'AIR LIQUIDE SOCIETE ANONYME POUR L'ETUDE ET
L'EXPLOITATION DES PROCEDES GEORGES CLAUDE
75, Quai d'Orsay
F-75321 Paris Cedex 07 (FR)

(54) Détendeur pour gaz purs.

(57) Ce détendeur comprend un étage final comportant une entrée (1), des moyens de détente (12,11,25,28) et une sortie basse pression (2).

Un filtre (15) ayant un seuil de filtration inférieur au micron est interposé entre les moyens de détente et la sortie basse pression.

Application à la fourniture de gaz très purs pour l'industrie électronique.

FIG.1

**Description**

## DETENDEUR POUR GAZ PURS

La présente invention concerne un détendeur pour gaz purs, du type comprenant un étage final comportant une entrée, des moyens de détente et une sortie basse pression.

Pour la mise en oeuvre de gaz purs nécessitant un taux de particules minimal, on utilise généralement un dispositif de filtration placé avant le point d'utilisation (préfiltre et filtre). Dans certains domaines, notamment dans celui de l'électronique, il est cependant nécessaire de pouvoir disposer d'une "ligne propre" (matériels et canalisations), ce qui permet d'améliorer la fiabilité de l'installation alimentée en gaz pur. Cette alimentation peut s'effectuer à partir d'une bouteille de gaz comprimé pourvue d'un robinet. A la sortie d'une telle bouteille est branché un détendeur qui permet d'abaisser la pression du gaz contenu dans la bouteille à un niveau basse pression convenant à l'utilisation envisagée. Or le nombre de particules solides entraînées par le courant de gaz sortant d'une telle bouteille peut être élevé et est difficile à maitriser ; il est donc particulièrement désirable de pouvoir disposer d'un détendeur permettant de filtrer la quasi-totalité de ces particules.

Un but de la présente invention est de fournir un détendeur de conception particulièrement simple permettant d'atteindre un seuil de filtration très bas.

A cet effet, l'invention a pour objet un détendeur du type précité, caractérisé en ce qu'il comporte un filtre ayant un seuil de filtration inférieur au micron interposé entre les moyens de détente et la sortie basse pression.

De façon avantageuse, le côté aval du filtre communique d'une part avec la sortie basse pression, d'autre part avec un conduit relié à un manomètre.

Le filtre peut être réalisé sous la forme d'une membrane prise en sandwich entre une grille-support et une grille de contre-pression, ou encore d'un tube en céramique.

On décrira ci-après, à titre d'exemples non limitatifs, deux formes d'exécution de la présente invention, en référence au dessin annexé sur lequel :

- la figure 1 est une vue partielle en coupe axiale de l'étage final d'un détendeur suivant l'invention ;

- la figure 2 est une vue analogue, à plus grande échelle, du cadre II de la figure 1 ; et

- la figure 3 est une vue analogue d'un autre mode d'exécution du détendeur suivant l'invention.

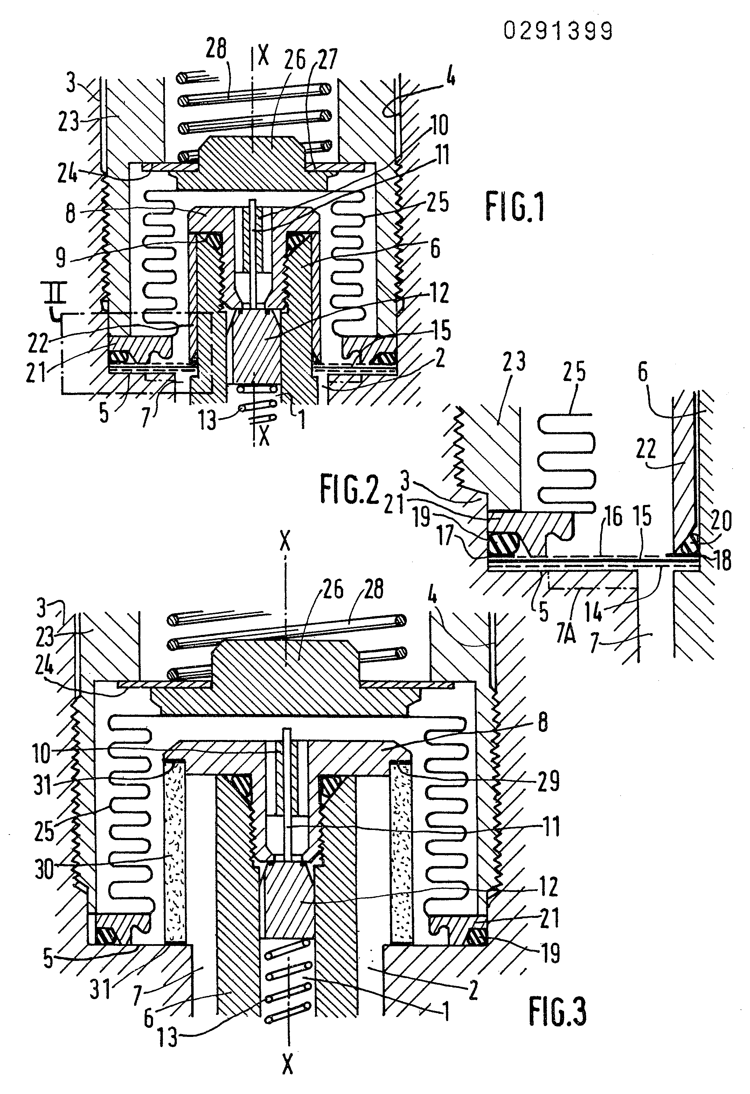

On a représenté aux figures 1 et 2 le second étage d'un détendeur à deux étages alimenté par une bouteille de gaz comprimé sous haute pression, par exemple d'azote sous une pression initiale de 200 bars.

Le premier étage du détendeur, non représenté, est de conception classique et est muni d'un ou plusieurs préfiltres à son entrée et à sa sortie ; il délivre à l'entrée 1 du second étage le gaz sous une pression moyenne, par exemple de quelques dizaines de bars. La fonction du second étage est de détendre à nouveau le gaz à partir de la moyenne pression et de fournir à sa sortie 2 le gaz pratiquement exempt de particules sous la basse pression d'utilisation désirée, qui est par exemple de l'ordre de quelques bars. La sortie 2 est reliée à une "ligne propre" (non représentée) conduisant au point d'utilisation.

Le second étage du détendeur, d'axe X-X supposé vertical, comprend un corps 3 qui délimite une cavité cylindrique 4 à fond 5 horizontal.

Une tubulure 6, délimitant l'entrée 1, fait saillie sur le fond 5. Deux conduits, à savoir la sortie 2 et un conduit 7 menant à un manomètre basse pression, sont percés dans le fond 5 près de la base de la tubulure 6.

Un bouchon 8 est vissé dans la sortie de la tubulure 6, avec interposition d'un joint d'étanchéïté annulaire 9. Ce bouchon présente un alésage central où est positionné un guide 10 pour une tige 11 librement coulissante. Un clapet 12 cannelé sur sa périphérie, guidé par la tubulure 1, tend à s'appliquer à joint étanche sur la face inférieure du bouchon 8 sous l'effet d'un ressort 13.

Comme on le voit mieux à la figure 2, trois rondelles sont empilées sur le fond 5 et s'étendent de la tubulure 6 à la paroi latérale de la cavité 4 : une grille inférieure de contre-pression 14, une membrane filtrante 15 en polymère, par exemple en "Téflon", et une grille support 16. Un ruban 17 de "Téflon" est posé sur la périphérie extérieure de la grille 16 et, de préférence, un autre ruban 18 de "Téflon" est posé sur la périphérie intérieure de cette grille, comme représenté. Un joint d'étanchéïté annulaire 19,20 est pressé sur chaque ruban 17,18 par un organe annulaire 21,22, respectivement.

L'organe extérieur 21 est une bague maintenue par un écrou tubulaire 23 vissé dans la cavité 4 et présentant un épaulement intérieur 24 au-dessus de la tubulure 6. Sur la périphérie interne de la bague 21 est sertie l'extrémité inférieure d'un soufflet 25 dont l'extrémité supérieure est fermée par un couvercle 26, lequel porte une rondelle 27 poussée vers le bas par un ressort 28.

L'organe intérieur 22 est un manchon enfilé sur la tubulure 6 et maintenu par la périphérie du bouchon 8.

En service, lorsque la pression après détente régnant dans le soufflet est suffisante, la rondelle 27 s'applique sur l'épaulement 24, comme représenté, et la tige 11 est libre. Le clapet 12 est alors fermé. Dès que cette pression descend au-dessous de la valeur de consigne, le ressort 28 devient prépondérant, et le couvercle 26 descend et repousse la tige 11 vers le bas, ce qui ouvre le clapet 12. Le gaz moyenne pression entrant par le conduit 1 est ainsi fourni à la sortie 2 et au conduit manométrique 7 sous une même basse pression d'utilisation régulée, après être passé dans l'espace intérieur du soufflet puis à travers la membrane filtrante.

Grâce à la présence de la membrane 15, qui a typiquement un seuil de filtration de 0,1 micron environ, le gaz sortant est pratiquement exempt de particules.

En variante, comme indiqué en trait mixte, on peut élargir les conduits 2 et/ou 7 au voisinage du fond 5 pour augmenter la section utile de la membrane 15. Cet élargissement est toutefois limité par l'affaiblissement résultant du support de la membrane.

Le mode de réalisation de la figure 3 est dans l'ensemble identique à celui des figures 1 et 2, mais avec les différences suivantes : les éléments 14 à 18,20 et 22 sont supprimés, de sorte que la bague 21 s'appuie directement sur le fond 5 ; le bouchon 8 est plus large et présente un lamage périphérique 29 ; un tronçon tubulaire 30 en céramique, ayant un seuil de filtration de 0,1 micron environ, est centré dans le lamage 28 et s'appuie sur le fond 5, à l'extérieur par rapport aux conduits 2 et 7. Des joints d'étanchéïté plats 31 sont prévus aux extrémités du filtre 30 et, de préférence, les zones d'extrémité de ce filtre sont émaillées pour en supprimer la porosité et, par suite, assurer une bonne étanchéïté.

En service, le gaz moyenne pression est détendu comme précédemment dans l'espace intérieur du soufflet, puis traverse le filtre 30 de l'extérieur vers l'intérieur pour parvenir, à la même basse pression d'utilisation, dans les conduits 2 et 7, pratiquement exempt de particules.

## Revendications

1. Détendeur, du type comprenant un étage final comportant une entrée (1), des moyens de détente (12,11,25,28) et une sortie basse pression (2), caractérisé en ce qu'il comporte un filtre (15;30) ayant un seuil de filtration inférieur au micron interposé entre les moyens de détente et la sortie basse pression.

2. Détendeur suivant la revendication 1, caractérisé en ce que le filtre (15;30) a un seuil de filtration de l'ordre de 0,1 micron.

3. Détendeur suivant l'une des revendications 1 et 2, caractérisé en ce que le filtre est réalisé sous la forme d'une membrane (15) prise en sandwich entre une grille-support (16) et une grille de contre-pression (14).

4. Détendeur suivant l'une des revendications 1 et 2, caractérisé en ce que le filtre (30) est réalisé sous la forme d'un tube en céramique.

5. Détendeur suivant la revendication 4, caractérisé en ce que le tube filtrant en céramique (30) est logé à l'intérieur d'un soufflet (25), entoure une partie tubulaire axiale (6) du corps du détendeur qui définit ladite entrée (1) et comporte un clapet de détente (12), et délimite avec cette partie tubulaire (6) un volume annulaire communiquant avec la sortie basse pression (2).

6. Détendeur suivant l'une quelconque des revendications 1 à 5, caractérisé en ce que le côté aval du filtre (15;30) communique d'une part avec la sortie basse pression (2), d'autre part avec un conduit (7) relié à un manomètre.

7. Détendeur suivant l'une quelconque des revendications 1 à 6, caractérisé en ce qu'il comprend un premier étage de détente équipé de moyens de préfiltration.

0291399

FIG.1

FIG.2

FIG.3

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | GB-A- 863 961 (THE HYMATIC ENGINEERING)<br>* Page 1, lignes 9-52; page 1, ligne 59 - page 2, ligne 55; figures * | 1 | F 25 B 41/06<br>F 17 C 13/04<br>B 01 D 46/54 |
| | --- | | |
| A | FR-A-2 210 428 (AMERACE)<br>* Page 22, revendications 1-3,7,9 * | 3 | |
| | --- | | |
| A | EP-A-0 092 839 (CERAVER)<br>* Résumé; page 4, lignes 1-10; figure 5 * | 4 | |
| | ----- | | |

**DOMAINES TECHNIQUES RECHERCHES (Int. Cl.4)**

B 01 D
F 17 C
F 25 B

Le présent rapport a été établi pour toutes les revendications

| Lieu de la recherche | Date d'achèvement de la recherche | Examinateur |
|---|---|---|
| LA HAYE | 19-07-1988 | SIEM T.D. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)